# EUROPEAN PATENT SPECIFICATION

(11) **EP 3 702 414 B1**
(45) Date of publication and mention of the grant of the patent: **04.08.2021**
(21) Application number: 20158122.0
(22) Date of filing: 19.02.2020
(51) Int. Cl.: C09D 4/00, G02B 1/14

(54) **METHOD OF PRODUCING HARD-COATED RESIN BODY**
VERFAHREN ZUR HERSTELLUNG EINES HARTBESCHICHTETEN HARZKÖRPERS
PROCÉDÉ DE PRODUCTION D'UN CORPS DE RÉSINE À REVÊTEMENT DUR

(30) Priority: 01.03.2019 JP 2019037437
(43) Date of publication of application: 02.09.2020
(73) Proprietor: Nidek Co., Ltd., Gamagori-shi, Aichi, 443-0038 (JP)
(72) Inventor: TEZUKA, Akira, Gamagori, Aichi, (JP); INUZUKA, Minoru, Gamagori, Aichi, (JP); ABE, Koji, Gamagori, Aichi, (JP)
(74) Representative: Hoefer & Partner Patentanwälte mbB

(56) References cited:
- EP-A1- 1 520 688
- EP-A1- 2 995 656
- EP-A2- 1 388 607

## Description

### TECHNICAL FIELD

The present disclosure relates to a method of producing a hard-coated resin body which is produced by adding a hard coating agent (hard coat composition) on a resin body.

### BACKGROUND

In the related art, there has been various hard coat compositions (resin compositions) used for a purpose of improving mechanical properties of a resin body (for example, plastic sheet, plastic lens, plastic film, etc.). For example, as the resin composition, there has been a resin composition produced by obtaining a polyfunctional (meth)acrylate monomer modification modifier through an addition reaction of a modifier having a thiol group and a (meth)acrylate monomer having a functionality of 3 or more, and modifying the obtained polyfunctional (meth)acrylate monomer modification modifier with metal oxide fine particles (see JP-A-2011-213989).

Such hard coating agent is deposited (applied) to a resin body by a common coating method (for example, dip coating method, spray coating method, spin coating method, etc.) to form a hard coat layer on the resin body. As a result, the mechanical properties or the like of the resin body are improved.

When the hard coat layer is formed by depositing the hard coating agent on the resin body by the common coating method, it is often troublesome for an operator to form the hard coat layer with a desired film thickness, and it is often difficult to control the film thickness. Further, when the hard coat layer is formed by depositing the hard coating agent on the resin body by the common coating method, much liquid wastes is generated, which is environmentally unfriendly. In addition, a large amount of the hard coating agent is used, which requires cost. EP2995656 discloses a method for producing a dyed resin body with a hard coat, comprising heating a dye attached to a substrate facing a resin body in a non-contact manner, to sublimate the dye, and then depositing the sublimated dye onto the resin body; fixing the dye by heating the resin body on which the dye is deposited; applying the composition for a hard coat onto the resin body on which the dye is fixed; and curing the composition for a hard coat by irradiating the applied composition for a hard coat with light.

EP1520688 discloses a method for forming a composite hard coat layer comprising a hard coat layer and an anti-staining surface layer on a surface of an article, the method characterized in the steps of applying a hard coat agent composition comprising an active energy ray-curable compound onto a surface of an article to be hard-coat-treated, thereby forming a hard coat agent composition layer, film-forming, on a surface of the hard coat agent composition layer, with a surface material comprising a fluorine-containing polyfunctional (meth)acrylate compound and a fluorine-containing monofunctional (meth)acrylate compound, thereby forming a surface material layer, and irradiating active energy rays onto the formed hard coat agent composition layer and surface material layer so as to cure the both layers simultaneously, thereby forming a hard coat layer contacting the surface of the article and an anti-staining surface layer contacting the surface of the hard coat layer.

EP1388607 discloses a dyeing method of a plastic lens, including the steps of placing the lens in a vacuum vapor deposition device; placing a base body for dyeing in the vapor deposition device, the base body having a dye application area in which a sublimatable dye is applied, so that the dye application area faces a surface of the lens to be dyed; and heating the base body in the vapor deposition device under almost a vacuum, while restraining a rise in temperature of the lens, to sublimate the dye, depositing the sublimed dye on the lens.

### SUMMARY

An object of the present disclosure is to provide a method of producing a hard-coated resin body, in which a hard coat layer can be easily formed on a resin body, and liquid wastes of a hard coating agent can be reduced.
(1) There is provided with a method of producing a hard-coated resin body, including:
   a first step of applying a hard coating agent to a base body to obtain a function-adding base body;
   a second step of setting the function-adding base body obtained in the first step to face a resin body, of heating the function-adding base body to evaporate the hard coating agent applied to the function-adding base body, and of depositing the hard coating agent on the resin body, wherein the second step is carried out in an evaporation unit and
   a third step of curing the hard coating agent on the resin body on which the hard coating agent is deposited in the second step.
(2) The method of producing the hard-coated resin body according to the above-described (1),
   in which in the third step, the hard coating agent on the resin body on which the hard coating agent is deposited in the second step is cured by at least performing irradiation of ultraviolet rays to the resin body on which the hard coating agent is deposited.
(3) The method of producing the hard-coated resin body according to the above-described (1) or (2),
   in which in the first step, the hard coating agent is applied to a metal base body as the base body.
(4) The method of producing the hard-coated resin body according to any one of the above-described (1) to (3),
   in which in the first step, the function-adding base body is obtained by printing the hard coating agent onto the base body with using a printing apparatus.
(5) The method of producing the hard-coated resin body according to any one of the above-described (1) to (4),
   in which in the second step, the function-adding base body obtained in the first step is set to face the resin body in a non-contact manner, the function-adding base body is heated to evaporate the hard coating agent applied to the function-adding base body, and the hard coating agent is deposited on the resin body.
(6) The method of producing the hard-coated resin body according to any one of the above-described (1) to (5),
   in which in the third step, the hard coating agent is cured by at least heating the resin body on which the hard coating agent is deposited.
(7) The method of producing the hard-coated resin body according to any one of the above-described (1) to (6),
   in which the resin body is a lens.

### BRIEF DESCRIPTION OF DRAWINGS

Fig. 1 is a flowchart showing a flow of a method of producing a hard-coated resin body.
Fig. 2 is a schematic view showing a production system used in the method of producing the hard-coated resin body.
Fig. 3 is a table showing results of experimental examples 1 to 28.
Fig. 4 is a table showing results of comparative examples 1 and 2.

### DETAILED DESCRIPTION

### <Overview>

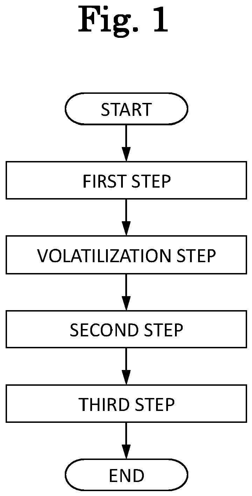

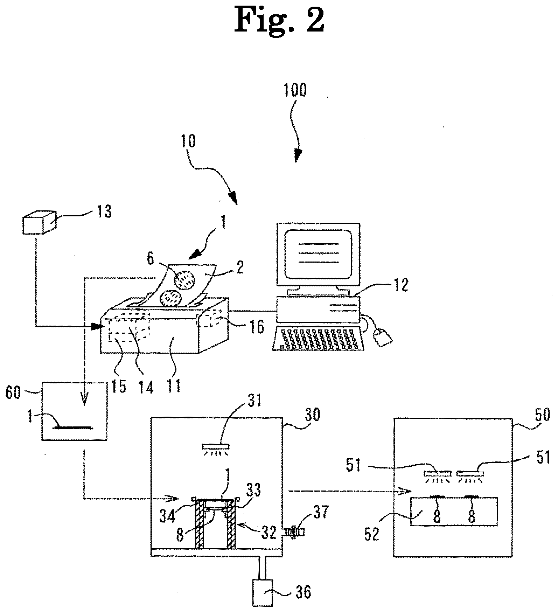

Hereinafter, one exemplary embodiment according to the present disclosure will be described with reference to the drawings. For example, Fig. 1 is a flowchart showing a flow of a method of producing a hard-coated resin body of the present embodiment. For example, Fig. 2 is a schematic view showing a production system used in the method of producing the hard-coated resin body of the present embodiment. The items classified by "< >" in the following can be used independently or in association with each other.

Hereinafter, a case where a hard coat layer is formed on a lens (for example, a lens 8), which is an example of the resin body, and a hard-coated lens is produced will be described as an example. However, the technique exemplified below can also be applied to a case where a hard coat layer is formed on a resin body other than a lens (for example, a cover of a mobile phone, a cover for light, an accessory, a toy, etc.) according to the present disclosure to produce a hard-coated resin body.

According to the present embodiment, for example, it is possible to form the hard coat layer on the resin body containing as a material at least any one of polycarbonate-based resin (e.g., diethylene glycol bis-allyl carbonate polymer (CR-39)), polyurethane-based resin (Trivex), allyl-based resin (e.g., allyl diglycol carbonate and copolymer thereof, diallyl phthalate and copolymer thereof), fumarate-based resin (e.g., benzyl fumarate copolymer), stylene-based resin, polymethyl acrylate-based resin, fiber-based resin (e.g., cellulose propionate), highly refractive material such as thiourethane-based or thioepoxy, and nylon-based resin (polyamide-based resin).

For example, in the method of producing the hard-coated resin body according to the present embodiment (hereinafter, referred to as the producing method), a first step, a second step, and a third step are performed. For example, the first step is a process of applying a hard coating agent to a base body, that is, coating the base body with the hard coating agent, to obtain a function-adding base body. For example, the second step is a process of setting the function-adding base body obtained in the first step to face a resin body, of heating the function-adding base body to evaporate the hard coating agent applied to the function-adding base body, and of depositing the hard coating agent on the resin body. For example, the third step is a process of curing the hard coating agent on the resin body on which the hard coating agent is deposited in the second step. For example, the producing method according to the present embodiment is performed in an order of the first step, the second step, and the third step.

It is possible to easily form the hard coat layer on the resin body, for example by performing the first step, the second step, and the third step, in which the hard coating agent is evaporated to deposit the hard coating agent on the resin body and the hard coating agent is cured. For example, since the hard coating agent can be used without waste, liquid wastes of the hard coating agent can be reduced as compared with a producing method of the related art.

### <First Step>

For example, in the first step, as a method of applying the hard coating agent to the base body to obtain the function-adding base body, the hard coating agent is applied to the base body (for example, a base body 2) by a hard coating agent deposition unit (for example, a hard coating agent deposition unit 10), so as to obtain (produce) the function-adding base body (for example, a function-adding base body 1). In this case, for example, at least one apparatus for applying the hard coating agent to the base body by driving a printing apparatus, a dispenser (a liquid quantitative coating apparatus), a roller, or the like may be used as the hard coating agent deposition unit. For example, the hard coating agent deposition unit may be any one that has a configuration capable of depositing the hard coating agent on the base body, without being limited to the above-mentioned hard coating agent deposition unit.

For example, when a printing apparatus is used as the hard coating agent deposition unit, at least one printing apparatus such as an inkjet printer (for example, an inkjet printer 11), a laser printer, or the like may be used as the printing apparatus. A printing apparatus different from the above may be used as well.

As described above, for example, a hard coating agent is applied to the base body by printing with the printing apparatus. Thus, it is possible to easily and more uniformly apply the hard coating agent to the base body in a desired range, for example by printing with the printing apparatus. Further, for example, the hard coating agent can be used without waste by printing with the printing apparatus. When the hard coating agent is evaporated, the hard coating agent can be deposited on the resin body more uniformly. Further, for example, since the application amount of the hard coating agent to the base body can be partially changed by printing with the printing apparatus, it is possible to deposit the hard coating agent on the resin body more uniformly with respect to resin bodies having various shapes, by partially controlling the coating amount. Further, for example, since the application amount of the hard coating agent to the base body can be partially changed by printing with the printing apparatus, the hard coating agent can be deposited while partially changing the application amount of the hard coating agent.

For example, in the first step, the method of applying the hard coating agent to the base body so as to obtain the function-adding base body may be a method of using at least one of a brush, a roller, a spray, or the like by an operator without using the hard coating agent deposition unit so as to deposit the hard coating agent on the base body.

For example, the base body used in the first step is a medium for temporarily holding the hard coating agent used for forming the hard coat layer on the resin body. For example, at least one of paper, metal (for example, aluminum, iron, copper, etc.), glass, or the like may be used as the base body. As an example, a metal may be used as the base body. Further, as an example, a base body in which a metal and paper are combined may be used as well.

For example, in the method of producing the hard-coated resin body according to the present disclosure, it is more preferable to use a metal base body. In this case, for example, in the first step, the hard coating agent may be applied to the metal base body as the base body.

For example, since a thermal conductivity of the metal base body is higher than that of a base body of another material (for example, paper, resin, etc.), the hard coating agent is likely to be evaporated efficiently. For example, when a resin base body is used, since the thermal conductivity is low, it is difficult to evaporate the hard coating agent, and it takes time for evaporation.

For example, since a temperature for evaporating the hard coating agent is high, it is more preferable to use a metal base body having excellent heat resistance. For example, when another base body, which has low heat resistance, is used, there is a possibility that the base body is damaged before evaporation of the hard coating agent is completed. By using a metal base body as in the present disclosure, it is possible to prevent the possibility that the base body is damaged before evaporation of the hard coating agent is completed.

For example, when a paper base body is used, since the paper base body contains a larger amount of impurities than a metal base body, the impurities are likely to be evaporated at the temperature for evaporating the hard coating agent. For example, since a hard coat film is formed on the surface of the resin body, when the impurities are deposited on the surface of the resin body, the impurities greatly affect quality deterioration of the hard coat film. By using a metal base body as in the present disclosure, it is possible to further prevent the influence of impurities, and it is possible to produce a better hard-coated resin body. In addition, for example, when a paper base body is used, since the hard coating agent enters between fibers of the paper (the hard coating agent tends to infiltrate), the hard coating agent becomes difficult to be evaporated. When a metal base body is used as in the present disclosure, since the hard coating agent is unlikely to enter the base body, the hard coating agent can be evaporated more easily.

For example, the thickness of the base body may be 1 µm or more and 1000 µm or less. For example, when the thickness of the base body is less than 1 µm, the strength of the base body is deteriorated. In this case, it becomes difficult for the operator to handle the function-adding base body. On the other hand, if the thickness of the base body is larger than 1000 µm, its cost increases and disposal is troublesome as well. The energy required to heat the hard coating agent (e.g., heating time and power) also increases. The thickness of the base body is not limited to the above thickness. For example, base bodies having various thicknesses can be used as the base body.

### <Second Step>

As described above, the second step is performed using the function-adding base body obtained in the first step. For example, in the second step, the function-adding base body obtained in the first step is set to face a resin body (for example, the lens 8), and the function-adding base body is heated to evaporate the hard coating agent applied to the function-adding base body, the hard coating agent is deposited on the resin body.

For example, in the second step, an evaporation unit (for example, an evaporation unit 30) is used. For example, the evaporation unit heats the hard coating agent deposited on the function-adding base body with an electromagnetic wave, so as to evaporate the hard coating agent toward the resin body. As a result, the hard coating agent is deposited on the resin body.

For example, the evaporation unit are irradiated to the function-adding base body, thereby increasing the temperature of the hard coating agent in short time. In order to evaporate the hard coating agent on the function-adding base body, it is also conceivable to heat the hard coating agent by bringing an iron plate or the like heated to a high temperature into contact with the function-adding base body. The evaporation unit is not limited to the above configuration. For example, the evaporation unit may be configured to be capable of increasing the temperature of the hard coating agent on the function-adding base body.

For example, when the function-adding base body is set to face the resin body in the second step, the base body may face the resin body in a non-contact manner (for example, 2 mm to 30 mm). In this case, for example, in the second step, the function-adding base body obtained in the first step may be set to face the resin body in the non-contact manner, and the function-adding base body may be heated, so as to evaporate the hard coating agent applied to the function-adding base body, and to deposit the hard coating agent on the resin body. For example, since the function-adding base body and the resin body face each other in the non-contact manner, it is possible to prevent the heat, generated when the function-adding base body is heated to evaporate the hard coating agent, from being conducted to the resin body. As a result, it is possible to prevent discoloration, shrinkage, or the like of the resin body due to the heat. In addition, for example, since a distance is generated between the function-adding base body and the resin body by facing each other in the non-contact manner, the hard coating agent can be sufficiently dispersed and deposited on the resin body. As a result, unevenness of the hard coating agent deposited can be prevented, and a hard coat film having a desired film thickness can be favorably formed with respect to the resin body.

For example, when the function-adding base body is set to face the resin body in the second step, the function-adding base body and the resin body may face each other in a state in contact with each other.

For example, in the second step, the hard coating agent may be evaporated in a state in which the periphery of the resin body is kept at a predetermined degree of vacuum, so as to deposit the hard coating agent on the resin body. As an example, when the resin body is placed in the evaporation unit and the hard coating agent is deposited, the inside of the evaporation unit may be set to a predetermined degree of vacuum by a vacuum apparatus (for example, a pump 36) so as to perform the deposition operation. By increasing the degree of vacuum, it is possible to evaporate the hard coating agent at a lower temperature. For example, the hard coating agent may be evaporated in a state in which the periphery of the resin body is kept at a normal pressure, so as to deposit the hard coating agent on the resin body. As an example, when the resin body is placed in the evaporation unit and the hard coating agent is deposited, the inside of the evaporation unit may be set to the normal pressure so as to perform the deposition operation.

### <Third Step>

For example, when the second step is completed, a third step is performed. For example, the third step cures the hard coating agent on the resin body to which the hard coating agent is deposited in the second step. By performing the third step, the hard coat film can be formed on the resin body.

For example, a method of curing the hard coating agent may be a method of heating the resin body. In this case, for example, when the resin body on which the hard coating agent is deposited is heated, the hard coating agent is cured, and the hard coat film is formed on the resin body. For example, a method of curing the hard coating agent may be a method of irradiating the resin body with electron beams. For example, a method of curing the hard coating agent may be a method of irradiating the resin body with ultraviolet rays. In this case, for example, in the third step, the hard coating agent on the resin body on which the hard coating agent is deposited in the second step may be cured by at least performing irradiation of the ultraviolet rays to the resin body on which the hard coating agent is deposited. For example, the hard coating agent can be cured in a shorter time since the hard coating agent is cured through the irradiation of the ultraviolet rays. In addition, for example, since the hard coating agent is cured through the irradiation with the ultraviolet rays, as compared to the case of curing with heat, deformation depending on the material of the resin body can be prevented, and it is possible to easily cure the hard coating agent on resin bodies of various materials.

For example, in the third step, a hard coating agent curing unit (for example, a hard coating agent curing unit 50) is used. For example, the hard coating agent curing unit (hereinafter, referred to as a curing unit) cures the hard coating agent on the resin body on which the hard coating agent is deposited. As a result, the hard coat film can be formed on the resin body.

For example, when a method of heating the resin body is used as a method of curing the hard coating agent, the curing unit heats the resin body on which the hard coating agent is deposited with an electromagnetic wave, so as to cure the hard coating agent, and to form the hard coat film on the resin body. In this case, for example, at least one of an oven (for example, a blast type constant temperature incubator), an infrared heater (such as a far-infrared heater), or a laser irradiation apparatus (for example, an apparatus for heating the function-adding base body) may be used as the curing unit. For example, the curing unit is not limited to the above configuration, and may be any one that heats the resin body on which the hard coating agent is deposited with an electromagnetic wave, so as to cure the hard coating agent, and to form the hard coat film on the resin body.

For example, when a method of irradiating the resin body with electron beams is used as the method of curing the hard coating agent, the curing unit irradiates the resin body on which the hard coating agent is deposited with the electron beams, so as to cure the hard coating agent, and to form the hard coat film on the resin body. In addition, for example, an EB (electron beams) apparatus or the like may be used as the curing unit. For example, the curing unit is not limited to the above configuration, and may be any one that irradiates the resin body on which the hard coating agent is deposited with electron beams, so as to cure the hard coating agent, and to form the hard coat film on the resin body.

For example, when a method of irradiating the resin body with the ultraviolet rays is used as the method of curing the hard coating agent, the curing unit irradiates the resin body on which the hard coating agent is deposited with the ultraviolet rays, so as to cure the hard coating agent, and to form the hard coat film on the resin body. For example, the curing unit may be an ultraviolet lamp, a laser irradiation apparatus (for example, an apparatus that scans the resin body with laser and irradiates the resin body with the ultraviolet rays) or the like. For example, when a laser irradiation apparatus is used, a laser light source may be any one capable of emitting laser light having a wavelength in an ultraviolet region. For example, the curing unit is not limited to the above configuration, and may be any one that irradiates the resin body on which the hard coating agent is deposited with the ultraviolet rays, so as to cure the hard coating agent, and to form the hard coat film on the resin body.

For example, when the hard coating agent is cured through the irradiation with the ultraviolet rays, the hard coating agent includes a photoreaction initiator that reacts upon the ultraviolet rays. For example, the photoreaction initiator may be a photopolymerization initiator that initiates in which a polymerization reaction upon light. In this case, for example, upon the irradiation with the ultraviolet rays, the photopolymerization initiator may react and the hard coating agent may be cured. For example, the photoreaction initiator may be a photoreaction initiator that generates an acid upon light. In this case, for example, the photoreaction initiator may be a photoreaction initiator that generates an acid and cure the hard coating agent through a reaction of the acid upon irradiation with the ultraviolet rays. The photoreaction initiator is not limited to the above-mentioned photoreaction initiator, and may be any photoreaction initiator that cures the hard coating agent when irradiated with the ultraviolet rays.

For example, in the third step, various methods may be performed in combination. As an example, in the third step, a method of curing by heating and a method of curing with the ultraviolet rays may be performed in combination.

For example, when the third step is performed, the hard coating agent on the resin body on which the hard coating agent is deposited may be cured under normal pressure. The third step may be performed under a different air pressure.

Two or more of the steps performed in each of the hard coating agent deposition unit, the evaporation unit, and the curing unit may be performed by a single apparatus. For example, a producing apparatus may be used to perform both the second step performed by the evaporation unit and the third step performed by the curing unit. In this case, for example, heating of the function-adding base body in the second step and curing of the resin body in the third step may be performed using the same light source. As an example, in the second step and the third step, a light having a wavelength appropriate for each step may be irradiated to perform each step by performing the steps while switching a wavelength of the light source. The producing apparatus may be configured to automatically perform a sequence of a plurality of steps (e.g., from the second step to the third step).

### <Volatilization Step>

For example, the production system for hard-coated resin body according to the present embodiment may further include a volatilization step. In this case, for example, the production system for hard-coated resin body may include the volatilization step of volatilizing at least a part of a solvent contained in the hard coating agent from the function-adding base body, which is the volatilization step performed after the first step. For example, the second step may be performed by using the function-adding base body in which at least a part of the solvent is volatilized through the volatilization step. For example, in the volatilization step, the entire solvent may be volatilized. Further, for example, in the volatilization step, a part of the solvent may be volatilized.

For example, since the volatilization step is performed after the first step, the second step can be performed using the function-adding base body in which at least a part of the solvent is volatilized. Therefore, it is possible to prevent the solvent contained in the hard coating agent from being evaporated and deposited on the resin body in the second step. For example, since it is possible to prevent the solvent from being deposited on the resin body, it is possible to prevent the solvent from infecting the resin body. As a result, it is possible to prevent deterioration of the quality of the resin body. Since the method of producing a hard-coated resin body of the related art is a method in which the solvent is in contact with the resin body, the resin body may be infected by the solvent, whereas according to the method according to the present disclosure, the hard-coated resin body can be produced in a state in which infection to the resin body is prevented as compared with the related art.

For example, a volatilization unit (for example, the volatilization unit 60) may be used in the volatilization step. In this case, for example, at least a part of the solvent in the function-adding base body obtained in the first step may be volatilized by the volatilization unit.

For example, as the volatilization unit, a heating apparatus that volatilizes the solvent by heating may be used. For example, the heating apparatus may heat the function-adding base body so as to volatilize the solvent. In this case, for example, at least one of an oven (for example, a blast type constant temperature incubator) or a laser irradiation apparatus (for example, an apparatus for heating the function-adding base body) may be used as the heating apparatus. For example, when an oven is used, the function-adding base body may be heated at 70°C for about 1 minute so as to volatilize at least a part of the solvent of the hard coating agent. A temperature and a time in the case of using an oven are not limited to those described above. For example, the heating apparatus is not limited to the above configuration, and may be any heating means capable of heating the function-adding base body so as to volatilize at least a part of the solvent of the hard coating agent.

For example, when conditions (e.g., air pressure) in the volatilization step and the second step are the same, the heating temperature in the volatilization step is lower than the heating temperature in the second step. That is, under the same conditions, the volatilization step is a process of heating the function-adding base body at a low temperature than in the second step.

The volatilization step is not limited to the method using the heating apparatus described above. For example, the volatilization step may be any method capable of volatilizing at least a part of the solvent in the hard coating agent. As an example, the volatilization step may be a method of changing an air pressure in the vicinity of the function-adding base body. In this case, for example, a vacuum apparatus (for example, a pump) may be used as the volatilization unit. For example, in the volatilization step, the vacuum apparatus controls the degree of vacuum in the vicinity of the function-adding base body to volatilize at least a part of the solvent of the hard coating agent.

For example, the volatilization step only needs to be performed after the first step. In this case, for example, the volatilization step may be performed after the first step and before the second step. That is, for example, the volatilization step may be a process performed between the first step and the second step. In this case, for example, the volatilization step may be performed after the first step and at the same timing as the second step. For example, in a case where the degree of vacuum before starting to heat the function-adding base body in the second step is controlled, control of the degree of vacuum before starting of evaporation in the second step and control of the degree of vacuum for volatilizing at least a part of the solvent of the hard coating agent in the volatilization step may be performed simultaneously. In the present embodiment, "simultaneously" includes a substantially simultaneous situation.

### <Hard Coating Agent>

In the present embodiment, for example, the hard coating agent may contain at least a resin. That is, for example, the hard coating agent may contain a resin as a main component. In addition, for example, the hard coating agent may contain a solvent for dissolving the resin as necessary. Further, for example, the hard coating agent may include a photopolymerization initiator for initiating a reaction for curing the hard coating agent with the ultraviolet rays. In this case, for example, a resin that is cured by the ultraviolet rays is used as the hard coating agent.

In the present embodiment, the hard coating agent further includes, as necessary, at least one of a photosensitizer, a leveling agent, an antifoaming agent, a fluidity adjusting agent, a light stabilizer, an antioxidant, a coloring agent, a pigment, a modifier having a thiol group (a mercapto group) (see JP-A-2011-213989 for details), a metal oxide fine particle, or the like may be included.

For example, the hard coating agent is preferably a hard coating agent that is not or unlikely to be cured by being heated. By using such a hard coating agent, when heat is applied to the hard coating agent in the second step or the like, it is possible to prevent the hard coating agent from hardening before being deposited on the resin body. The hard coating agent according to the present embodiment is not limited to a hard coating agent that is not or unlikely to be cured by being heated. For example, when a hard coating agent that is likely to be cured is used as the hard coating agent, in the second step, the hard coating agent can be evaporated at a lower temperature by controlling the degree of vacuum in the vicinity of the hard coating agent, so that the hard coating agent can be evaporated while preventing curing of the hard coating agent.

For example, at least one of resins having functionality of 1 or more may be used as the resin. That is, for example, one type of resin may be used as the resin. As an example, a trifunctional resin may be used alone. Further, as an example, a tetrafunctional resin may be used. In addition, for example, a plurality of types of resins may be used in combination as the resin. As an example, a difunctional resin and a trifunctional resin may be combined. Further, as an example, a difunctional resin and a tetrafunctional resin may be combined. Further, as an example, a monofunctional resin and a trifunctional resin may be combined. Further, as an example, a monofunctional resin and a tetrafunctional resin may be combined. Further, as an example, a trifunctional resin and a tetrafunctional resin may be combined.

For example, as the resin, if the number of functional groups of the resin is small, when the hard coating agent is evaporated in the second step, the hard coating agent may be low in viscosity and thus is less likely to be deposited on the resin body, and the hard coating agent may be less likely to be cured in the third step. That is, the hard coating agent may be less likely to be cured in the third step, which deteriorates a performance of the hard coating agent for improving the mechanical properties or the like. For this reason, for example, it is preferable to use a resin having a functionality of at least 2 or more as the resin. Furthermore, for example, it is more preferable to use a resin having a functionality of at least 3 or more as the resin.

Further, for example, when a resin having a large number of functional groups is used, the hard coating agent may be less likely to evaporate in the second step. For this reason, for example, it is more preferable to use a resin having a functionality of 6 or less as the resin. That is, for example, it is more preferable to use a monofunctional to hexafunctional resin as the resin. In addition, it is further preferable to use a resin having a functionality of 4 or less as the resin. By using a resin having a functionality of 4 or less, the hard coating agent can be evaporated more easily. The production method according to the present disclosure can easily form a hard coat film on a resin body even when a hard coating agent containing resins having various numbers of functional groups is used regardless of the number of functional groups of the resin.

For example, a resin such as a (meth)acrylate monomer may be used as the resin. The expression "...(meth)acrylate" represents "...acrylate" or "...methacrylate". For example, when a (meth)acrylate monomer is used as the resin, at least one of (meth)acrylate monomers having a functionality of 1 or more is used. The following description uses a (meth)acrylate monomer as an example of the resin contained in the hard coating agent, whereas the resin is not limited thereto. For example, various resins can be used as the resin contained in the hard coating agent. In this case, for example, an epoxy resin, a silane coupling agent, or the like may be used as the various resins.

For example, in the present embodiment, examples of the (meth)acrylate monomer that can be used in the hard coating agent may include:
(meth)acrylates
   in a linear shape such as methyl (meth)acrylate, n-butyl (meth)acrylate, 2-ethylhexyl (meth)acrylate, n-butoxyethyl (meth)acrylate, methoxypolyethylene glycol (meth)acrylate, benzyl (meth)acrylate, isobonyl (meth)acrylate, 2-hydroxyethyl (meth)acrylate, 2-hydroxypropyl (meth)acrylate, glycerin (meth)acrylate, n-acryloyloxyethyl hexahydrophthalimide, glyceride (meth)acrylate, 2-hydroxy-3-acryloyloxypropyl (meth)acrylate, tetrahydrofurfuryl (meth)acrylate, 2-hydroxybutyl (meth)acrylate, ethylene glycol di(meth)acrylate, 1,3-propylene glycol di(meth)acrylate, 1,4-heptanediol di(meth)acrylate, 1,6-hexanediol di(meth)acrylate, diethylene glycol di(meth)acrylate, tetraethylene glycol di(meth)acrylate, 2-butene-1,4-di(meth)acrylate, cyclohexane-1,4-dimethanol di(meth)acrylate, 1,5-pentane di(meth)acrylate, trimethylolethane di(meth)acrylate, trimethylolpropane (meth)acrylate, dipropylene glycol di(meth)acrylate, 1,3-butylene glycol di(meth)acrylate, and dioxane glycol diacrylate,
   in a branched shape such as dioxane glycol diacrylate or
   in a branched or cyclic shape such as trimethylolpropane trimethacrylate, trimethylolpropane triacrylate, ethylene oxide-modified trimethylolpropane triacrylate, pentaerythritol triacrylate, pentaerythritol tetraacrylate, dipentaerythritol hexaacrylate, tetramethylol methane triacrylate, tetramethylol methane tetraacrylate, tris(2-hydroxyethyl) isocyanurate triacrylate; or
urethane acrylates.

For example, one type of (meth)acrylate monomer or a combination of a plurality of types of (meth)acrylate monomers may be used as the (meth)acrylate monomer having a functionality of 1 or more. The (meth)acrylate monomers are not limited to those mentioned above. A (meth)acrylate monomer different from the (meth)acrylate monomers described above can also be used.

For example, in the present embodiment, at least one of a glycol-based solvent, a lower alcohol, a ketone-based solvent, or the like may be used as the solvent. In this case, for example, a combination of a glycol-based solvent and a lower alcohol may be used. Further, for example, one of a glycol-based solvent and a lower alcohol may be used. For example, in a case of using a glycol-based solvent, one type of glycol-based solvent may be used, or a plurality of types of glycol-based solvents may be used. Further, for example, when a lower alcohol system is used, one type of lower alcohol may be used, or a plurality of types of lower alcohols may be used. For example, the solvent is not limited to the above solvents. For example, various solvents may be used as the solvent.

Examples of the glycol-based solvent include at least one of propylene glycol monomethyl ether (PGM), propylene glycol monomethyl ether acetate (PGMEA), ethylene glycol, diethylene glycol, triethylene glycol, methyl cellosolve (ethylene glycol monomethyl ether), ethyl cellosolve (ethylene glycol monoethyl ether), butyl cellosolve (ethylene glycol monobutyl ether), diethylene glycol monomethyl ether, diethylene glycol diethyl ether, diethylene glycol dibutyl ether, and triethylene glycol monomethyl ether. The glycol-based solvent is not limited to those listed here.

Examples of the lower alcohol include methanol, ethanol, isopropyl alcohol (IPA), and glycerin. The lower alcohol is not limited to those listed here.

Examples of the ketone-based solvent include acetone, methyl ethyl ketone (MEK), and methyl isobutyl ketone (MIBK). The ketone-based solvent is not limited to those listed here.

Examples of the photopolymerization initiator include: triazine based compounds such as tris(chloromethyl) triazine, 2,4-trichloromethyl-(4'-methoxystyryl)-6-triazine, 2-[2-(furan-2-yl)-ethenyl]-4,6-bis(trichloromethyl)-S-triazine, 2,4,6-tris(trichloromethyl)-S-triazine, benzoin based compounds such as benzoin methyl ether, benzoin ethyl ether, benzoin isopropyl ether, and benzoin butyl ether; acetophenone based compounds such as diethoxyacetophenone, 4-phenoxydichlorolatophenone, 2-benzyl-2-dimethylamino-1-(4-morpholinophenyl)-butan-1-one, benzophenone, 2-hydroxy-2-methylpropiophenone, 1-hydroxycyclohexyl phenyl ketone, and 1-hydroxycyclohexylacetophenone; thioxanthone compounds such as thioxanthone, 2-methylthioxanthone, 2,4-dimethylthioxanthone, and 2-chlorothioxanthone; benzyldimethylketal, 2,4,6-trimethylbenzoinphenylphosphine oxide, isoamyl N,N-dimethylaminobenzoate, and acyl phosphine oxide. Further, for example, one type or two or more types of the photopolymerization initiator may be used in combination (mixed).

The method of producing the hard-coated resin body according to the present embodiment can also be applied to a resin body that is dyed (dyed resin body). In this case, a hard coat film may be formed on the dyed resin body. For example, the dyed resin body can be obtained with various dyeing methods. For example, the dyed resin body may be obtained by using at least one of a method of kneading a dye into a resin body, a method of immersing the resin body in a liquid with a dye mixed therein for a predetermined time (immersion method), a method of forming a multilayer film with respect to a resin body, or the like.

In addition, for example, the dyed resin body may be obtained by using a vapor phase transfer dyeing method. For example, in the vapor phase transfer dyeing method, performed are: a dyeing base body obtaining step of applying a dye to a base body so as to obtain a dyeing base body; an evaporation step of causing the dyeing base body and a resin body to face each other and heating the dyeing base body, so as to sublimate the dye applied to the dyeing base body, and to deposit the dye on the resin body; and a fixing step of heating the resin body on which the dye is deposited, so as to fix the dye to the resin body. In this case, for example, an apparatus used in at least one of the dyeing base body obtaining step, the evaporation step, and the fixing step may be used also as the apparatus used in the first step, the second step, and the third step, which are performed in the method of producing the hard-coated resin body. As an example, each of the first step and the dyeing base body obtaining step may be performed with a single apparatus. As an example, each of the second step and the evaporation step may be performed with a single apparatus. As an example, each of the third step and the fixing step may be performed with a single apparatus. As an example, each of the second step, the third step, the evaporation step, and the fixing step may be performed with a single apparatus.

### <Example>

Hereinafter, an example of the method of producing the hard-coated resin body using the production system for the hard-coated resin body according to the above embodiment will be described.

A schematic configuration of a production system for hard-coated resin body (hereinafter, referred to as a production system) 100 of the example will be described with reference to Fig. 2. The production system 100 of the example includes a hard coating agent deposition unit (hereinafter, referred to as a deposition unit) 10, an evaporation unit 30, and a curing unit 50. For example, the evaporation unit 30 is used to heat the function-adding base body 1 to which the hard coating agent is applied, so as to evaporate the hard coating agent applied to the function-adding base body 1, and to deposit the hard coating agent on the lens 8. For example, the curing unit 50 is used to cure the hard coating agent on the lens 8 on which the hard coating agent is deposited so as to form a hard coat layer on the lens 8.

For example, the first step applies the hard coating agent to the base body with the deposition unit 10, so as to obtain (produce) the function-adding base body 1. For example, in the first step, the deposition unit 10 deposits the hard coating agent, which is to be evaporated on the lens 8 later, to the base body 2, so as to form a hard coating agent portion 6. In the example, a resin, a solvent, and a photopolymerization initiator are mixed in the hard coating agent portion 6. For example, the base body 2 is a medium for temporarily holding the hard coating agent used for forming the hard coat layer on the lens 8. The details of the base body 2 will be described later.

In the present example, for example, the deposition unit 10 deposits (by printing in the example) the hard coating agent on the base body 2 using the inkjet printer 11. Therefore, the deposition unit 10 can deposit the hard coating agent on the base body 2 more accurately so that the film thickness of the hard coat layer formed on the lens 8 is a desired film thickness of the operator. That is, accuracy of the amount of the hard coating agent deposited on the base body 2 is improved.

In the present example, for example, a printing apparatus is used as the deposition unit 10. For example, in the first step, in the first step, the function-adding base body 1 is obtained by printing the hard coating agent onto the base body 2 using the printing apparatus. Thus, it is possible to easily and more uniformly apply the hard coating agent to the base body 2 in a desired range, for example by printing with the printing apparatus. Further, for example, the hard coating agent can be used without waste by printing with the printing apparatus. When the hard coating agent is evaporated, the hard coating agent can be deposited on the resin body more uniformly. Further, for example, since the application amount of the hard coating agent to the base body 2 can be partially changed by printing with the printing apparatus, the hard coating agent can be deposited on the resin body more uniformly with respect to resin bodies having various shapes by partially controlling the coating amount. Further, for example, since the application amount of the hard coating agent to the base body 2 can be partially changed by printing with the printing apparatus, the hard coating agent can be deposited while partially changing the application amount of the hard coating agent.

In the example, since the volatilization step of volatilizing the solvent of the hard coating agent printed by the printing apparatus is performed , it is possible to prevent the lens 8 from being infected by the solvent contained in the hard coating agent when the hard coat layer is formed on the lens 8.

In the example, for example, a case in which the inject printer 11 is used as the printing apparatus will be described as an example. In this case, for example, in the example, the hard coating agent is applied to the base body 2 by printing with the inkjet printer 11. In the example, for example, the injector printer 11 includes a mounted unit 14, an inkjet head 15, and a control unit 16. The injector printer 11 is not limited to the above configuration.

For example, the hard coating agent is prepared to have a property that can be injected by the injector printer 11 (for example, the amount of the solvent is prepared), and then a container of the hard coating agent (for example, a cartridge 13 described later) is mounted to the mounted unit 14. For example, the inkjet head 15 injects the hard coating agent from the container of the hard coating agent mounted to the mounted unit 14 toward the base body 2. Thus, the hard coating agent is printed on the base body 2. For example, the control unit 16 controls the inkjet head 15 to drive for the injection of the hard coating agent from the inkjet head 15.

For example, in order to print the hard coating agent for forming the hard coat layer using the inkjet printer 11 so as to have the desired film thickness, a personal computer 12 (hereinafter, referred to as PC) is used for preparing the amount of the hard coating agent to be printed. For example, since the amount of the hard coating agent is prepared with drawing software or the like installed in the PC 12, data indicating the amount of the hard coating agent necessary for forming the hard coat layer having a desired film thickness can be stored in the PC 12. Therefore, when necessary, the same amount of the hard coating agent can be obtained for any number of times. In addition, for example, the amount of the hard coating agent can be partially changed by printing. That is, for example, the amount of the hard coating agent to be printed on the base body 2 can be partially changed. Thus, a hard coat layer having a different film thickness can be partially formed on the lens 8.

For example, paper, metal plate (for example, aluminum, iron, copper, or the like), glass, or the like may be used as the base body 2 on which the hard coating agent is printed by the printing apparatus. In the following description, the base body 2 is made of metals as an example. In the example, for example, the base body 2 has a sheet-like shape.

For example, since a thermal conductivity of the metal base body is higher than that of a base body of another material (for example, paper, resin, etc.), the hard coating agent is likely to be evaporated efficiently. Further, for example, it is possible to prevent the possibility that the base body is damaged before evaporation of the hard coating agent is completed because the base body 2 is made of the metals. Further, for example, since the base body 2 is made of the metals, it is possible to further prevent the influence of impurities. Therefore, it is possible to produce a better hard-coated resin body. Further, for example, since the base body 2 is made of the metals, the hard coating agent is unlikely to enter the base body. Therefore, the hard coating agent can be evaporated more easily.

In the following description, the printing apparatus will be the inject printer 11 as an example. For example, the base body 2 is placed in the injector printer 11, and printing is performed through operation of the PC 12 such that a hard coat film having a preset film thickness can be formed on the lens 8.

In the example, the configuration in which the inkjet printer 11 is used as the printing apparatus in the deposition unit 10 has been described as an example, whereas the present invention is not limited thereto. The printing apparatus may be configured to apply the hard coating agent to the base body 2 by performing printing using a laser printer.

In the example, the configuration in which the hard coating agent is deposited on the base body 2 using the printing apparatus as the deposition unit 10 has been described as an example, whereas the configuration of the deposition unit 10 is not limited thereto. For example, the deposition unit 10 may have any configuration that can deposit the hard coating agent on the base body 2. For example, the deposition unit 10 may deposit ink to the base body 2 by driving a dispenser (liquid quantitative coating apparatus), a roller, or the like. For example, in the first step, an operator may use a brush, a roller, a spray, or the like to deposit the hard coating agent on the base body 2 without using the deposition unit 10.

For example, after the first step, the volatilization step is performed in the volatilization unit 60. For example, the volatilization unit 60 volatilizes at least a part of the solvent from the hard coating agent portion 6 on the function-adding base body 1. In the example, for example, an oven is used as the volatilization unit 60. For example, when the volatilization unit 60 heats the hard coating agent portion 6 deposited on the function-adding base body 1, at least a part of the solvent contained in the hard coating agent of the hard coating agent portion 6 is evaporated. As a result, the function-adding base body 1 in which at least a part of the solvent contained in the hard coating agent is volatilized is obtained.

For example, when an oven is used as the volatilization unit 60, the function-adding base body 1 is heated at 70°C for about 1 minute in the volatilization unit 60 so as to volatilize at least a part of the solvent of the hard coating agent. A temperature and a time in the case of using an oven are not limited to those described above. For example, the volatilization unit is not limited to the above configuration, and may have any configuration capable of volatilizing at least a part of the solvent of the hard coating agent.

Thereby, since the second step can be performed using the function-adding base body 1 after the volatilization, it is possible to prevent the solvent contained in the hard coating agent from being evaporated and deposited on the lens 8 in the second step. For example, since it is possible to prevent the solvent from being deposited on the lens 8, it is possible to prevent the solvent from infecting the lens 8. As a result, it is possible to prevent the deterioration of the quality of the lens 8.

In the example, a case in which the volatilization step is performed is described as an example, whereas the volatilization step may not be performed. In this case, the second step is performed after the first step is performed.

In the example, as described above, the function-adding base body 1 obtained in the first step is used in the second step after the volatilization step. For example, in the second step, the function-adding base body 1 obtained in the first step is set to face a resin body (the lens 8 in the example), the function-adding base body 1 is heated to evaporate the hard coating agent applied to the function-adding base body 1, and the hard coating agent is deposited on the lens 8. For example, in the second step, the evaporation unit 30 is used.

For example, the evaporation unit 30 heats the hard coating agent deposited on the function-adding base body 1 with an electromagnetic wave, so as to evaporate the hard coating agent toward the lens 8. As a result, the hard coating agent is evaporated onto the lens 8. The evaporation unit 30 according to the example includes an electromagnetic wave generating part 31, an evaporation jig 32, a pump 36, and a valve 37. The configuration of the evaporation unit 30 is not limited to the above configuration.

For example, the electromagnetic wave generating part 31 generates an electromagnetic wave. In the example, as one example, a halogen lamp that generates infrared light is used as the electromagnetic wave generating part 31. However, the electromagnetic wave generating part 31 may be any one that generates an electromagnetic wave. Accordingly, instead of the halogen lamp, any configuration that generates electromagnetic waves having other wavelengths such as the ultraviolet rays and microwave may be used. For example, the evaporation unit 30 apply the electromagnetic wave to the function-adding base body 1, thereby increasing the temperature of the hard coating agent in short time. To sublimate the hard coating agent on the function-adding base body 1, it is also conceivable to heat the hard coating agent by bringing an iron plate or the like heated to a high temperature into contact with the function-adding base body 1. However, it is difficult to bring the function-adding base body 1 and the iron plate or the like into uniform contact (for example, without gaps) with each other. Unless the contact state is uniform, the hard coating agent is not uniformly heated, resulting in unevenness of the hard coating agent deposited and so on. On the other hand, the evaporation unit 30 of the example enables uniform heating of the hard coating agent with the electromagnetic waves from the electromagnetic wave generating part 31 placed at a distance from the function-adding base body 1.

For example, the evaporation jig 32 holds the function-adding base body 1 and the lens 8. The evaporation jig 32 of the example is provided with a lens supporting part 33 and a base body supporting part 34. The lens supporting part 33 includes a cylindrical base portion and a mount table placed inside the base portion. The lens 8 is supported on the mount table of the lens supporting part 33 in a state where the lens 8 is surrounded by the base portion. The base body supporting part 34 is located at an upper end of the cylindrical base portion to support the function-adding base body 1 above the lens 8. Even though the details are not illustrated, when an outer peripheral edge portion of the function-adding base body 1 is placed on the base body supporting part 34, an annular base-body retainer member is put from above on the outer peripheral edge portion of the function-adding base body 1. The position of the function-adding base body 1 is thus fixed.

For example, the function-adding base body 1 is placed such that a surface on which the hard coating agent is deposited faces the lens 8. In the example, since the function-adding base body 1 is supported above the lens 8, the function-adding base body 1 is placed on the base body supporting part 34 such that the surface on which the hard coating agent portion 6 is formed faces down.

For example, the function-adding base body 1 may face the lens 8in a non-contact manner (for example, a distance of 2 mm to 30 mm). In this case, for example, in the second step, the function-adding base body 1 obtained in the first step may be set to face the lens 8 in the non-contact manner, and the function-adding base body 1 may be heated, so as to evaporate the hard coating agent applied to the function-adding base body 1, and to deposit the hard coating agent on the lens 8.

For example, since the function-adding base body 1 faces the lens 8 in the non-contact manner, it is possible to prevent the heat, generated when the base body is heated to evaporate the hard coating agent, from being conducted to the resin body. As a result, it is possible to prevent discoloration, shrinkage, or the like of the resin body due to the heat. In addition, for example, since a distance is generated between the function-adding base body 1 and the lens 8 by facing each other in the non-contact manner, the hard coating agent can be sufficiently dispersed to be deposited on the resin body. As a result, unevenness of the hard coating agent deposited can be prevented, and a hard coat film having a desired film thickness can be favorably formed. In particular, when applied to the base body 2 with the amount of the hard coating agent partially changed, a hard coat film having a partially different film thickness can be formed on the resin body. When the function-adding base body 1 is set to face the lens 8, those may be set to face each other in a contact manner.

For example, the pump 36 exhausts air in the evaporation unit 30 to the outside, thereby decreasing air pressure of the inside of the evaporation unit 30. That is, for example, the pump 36 exhausts air in the evaporation unit 30 to the outside, thereby setting the evaporation unit 30 to a predetermined degree of vacuum.

For example, in the second step, when the lens 8 is placed in the evaporation unit 30 to deposit the hard coating agent, the inside of the evaporation unit 30 is set to the predetermined degree of vacuum by the pump 36 so as to perform the deposition operation. In the example, for example, the inside of the evaporation unit 30 is set to a predetermined degree of vacuum, but is not limited thereto, and the deposition operation may be performed with the inside of the evaporation unit 30 under normal pressure.

For example, the pump 36 serves to exhaust air in the evaporation unit 30 to the outside, thereby decreasing air pressure of the inside of the evaporation unit 30. For example, the air pressure inside the evaporation unit 30 at the time of evaporation may be about 0.01 kPa to 5 kPa, more preferably about 0.05 kPa to 3 kPa. That is, for example, the pump 36 can be used to bring the inside of the evaporation unit 30 into a substantially vacuum state. For example, the valve 37 serves to selectively open and close the internal space of the evaporation unit 30. That is, for example, by opening the valve 37, the valve 37 can be used to introduce the outside air into the evaporation unit 30 that was set to the substantially vacuum state by the pump 36 and return the evaporation unit 30 to the atmospheric pressure.

For example, after the vacuum state is set, the function-adding base body 1 is heated from above using the electromagnetic wave generating part 31 to evaporate the hard coating agent. For example, when the heating temperature is lower than 100°C on the function-adding base body 1, the hard coating agent is unlikely to evaporate from the function-adding base body 1, and, for example, when the heating temperature exceeds 500°C, deterioration of the hard coating agent or deformation of the lens 8 is likely to occur due to the high temperature. Therefore, the heating temperature may be between 100°C and 500°C, whereas the heating temperature may be selected as high as possible in accordance with the material of the lens 8.

For example, when the second step is completed, the third step is performed. The third step will be described below. For example, in the third step, the hard coating agent deposited on the lens 8 in the second step is cured to form the hard coat film on the lens 8. For example, in the example, the third step is a process of curing the hard coating agent by irradiating with the ultraviolet rays.

For example, the curing unit 50 is used to irradiate the lens 8 on which the hard coating agent is evaporated with the ultraviolet rays to cure the hard coating agent, so as to form the hard coat film on the lens 8. For example, the curing unit 50 includes an ultraviolet lamp 51 and a mount table 52. For example, the lens 8 on which the hard coating agent is deposited is mounted on the mount table 52. For example, the ultraviolet lamp 51 irradiates with the ultraviolet rays. For example, the ultraviolet rays from the ultraviolet lamp 52 is emitted toward the lens 8 mounted on the mount table 52.

For example, when the lens 8 is irradiated with the ultraviolet rays, the hard coating agent deposited on the lens 8 starts the reaction. For example, the hard coating agent of the example contains the photopolymerization initiator as the photoreaction initiator in the hard coating agent. Therefore, for example, when the lens 8 is irradiated with the ultraviolet rays, the hard coating agent deposited on the lens 8 is irradiated with the ultraviolet rays, and the photopolymerization initiator of the lens 8 reacts to start the polymerization reaction of the hard coating agent. As a result, the hard coating agent deposited on the lens 8 is cured, and a hard coat film is formed on the lens 8.

For example, when the third step is performed, the hard coating agent may be fixed by being irradiated with the ultraviolet rays under normal pressure. The third step may be performed under a different air pressure. For example, the operator takes out the lens 8 on which the hard coating agent is deposited after the deposition of the hard coating agent on the lens 8 has been performed in the evaporation unit 30. For example, the operator places the lens 8 in the curing unit 50 and irradiates the lens 8 with the ultraviolet rays under normal pressure to cure the hard coating agent.

For example, an accumulated light amount of the ultraviolet rays by the ultraviolet lamp may be 100 to 6000 mJ/cm², more preferably 200 to 4000 mJ/cm². The accumulated light amount of the ultraviolet rays is not limited to the accumulated light amount described above. For example, the accumulated light amount of the ultraviolet rays may be any accumulated light amount that enables curing of the hard coating agent.

As described above, for example, the method of producing the hard-coated resin body of the example includes the first step of applying the hard coating agent to the base body to obtain the function-adding base body, the second step of setting the function-adding base body obtained in the first step to face the resin body, of heating the function-adding base body to evaporate the hard coating agent applied to the function-adding base body, and of depositing the hard coating agent on the resin body, and the third step of curing the hard coating agent on the resin body on which the hard coating agent is deposited in the second step. Thus, it is possible to easily add the hard coat layer on the resin body, for example by sublimating the hard coating agent to deposit on the resin body and fixing the hard coating agent on the resin body. Further, for example, since the hard coating agent can be used without waste, liquid wastes of the hard coating agent can be reduced as compared with a producing method of the related art.

For example, in the third step, the hard coating agent on the resin body on which the hard coating agent is deposited in the second step may be cured by at least performing the irradiation of the ultraviolet rays to the resin body on which the hard coating agent is deposited. Therefore, since the hard coating agent is cured through the irradiation of the ultraviolet rays, the hard coating agent can be cured in a shorter time. In addition, since the hard coating agent is cured through the irradiation with the ultraviolet rays, as compared with the case of curing with heat, deformation depending on the material of the resin body can be prevented, and it is possible to easily cure the hard coating agent on resin bodies of various materials.

In the example, the shape of the hard coating agent portion 6 (print shape) is circular, but is not limited thereto, and may be, for example, a semicircular shape or another shape (for example, a square shape).

In the example, the function-adding base body 1 is heated from above, but is not limited thereto. For example, the heating method of the function-adding base body 1 can evaporate the hard coating agent in the same manner even by heating from a side surface or from below.

Hereinafter, the present disclosure will be specifically described with reference to the present experimental examples and comparative examples, but the present disclosure is not limited to the following experimental examples. In the following Experimental Examples 1 to 26, a hard coat film (hard coat layer) was formed on a resin body with the production method of the disclosure using a hard coating agent containing a resin having 1 to 6 functional groups, and whether the hard coat film was uniformly formed and an infection state of the resin body by the solvent contained in the hard coating agent was confirmed. In Experimental Examples 27 and 28, a hard coat film was formed on a resin body with the production method of the disclosure using a solvent easy to infect the resin body as the solvent contained in the hard coating agent and using a resin body easy to be affected by infection, and whether the hard coat film was uniformly formed and an infection state of the resin body by the solvent contained in the hard coating agent was confirmed.

Further, in Comparative Examples 1 and 2, a hard coat film was formed on a resin body with the method of Experimental Examples 27 and 28 of forming a hard coat film on a resin body using a solvent easy to infect the resin body and a resin body easy to be affected by infection, and for comparison, with a method of related art (spin coating in this comparative example) using a solvent easy to infect the resin body and a resin body easy to be affected by infection, and whether the hard coat film was uniformly formed and an infection state of the resin body by the solvent contained in the hard coating agent was confirmed.

### <Experimental Example 1>

0.20 g of Irgacure 184 (Irg184) (produced by BASF Japan) as a photopolymerization initiator and 5.20 g of propylene glycol monomethyl ether (PGM) (produced by Taiyo Kagaku Co., Ltd.) as a solvent were added to 5 g of 2-acryloyloxyethyl succinic acid (A-SA) (produced by Shin-Nakamura Chemical Co., Ltd.) as a resin, and stirred, and thereby a hard coating agent (hard coat resin composition) was prepared and filtered.

Next, using a bar coater, the prepared hard coating agent was applied to an aluminum base body (produced by Toyo Aluminum Ekco Products Co., Ltd.) whose internal surface is black, so as to prepare a function-adding base body. Next, in order to volatilize the solvent of the hard coating agent in the function-adding base body, the function-adding base body was heated at 70°C for 1 minute in an oven.

The function-adding base body was attached to a transfer jig in an evaporation unit (TTM-1000; produced by Nidek), so as to perform evaporation operation of hard coating liquid to a polycarbonate (PC) lens (S-0.00). At this time, a distance between a coating surface side of the PC lens and the function-adding base body was set to 5 mm. After an air pressure in the evaporation unit was lowered to 100 Pa or less by a vacuum pump, a surface temperature of the function-adding base body was heated to 200°C by a heating unit (using a halogen lamp in this experimental example). A condition at this time was obtained by measuring a temperature in the vicinity of the function-adding base body with a temperature sensor (not shown), so as to confirm that the temperature was heated to 200°C, and the hard coating agent was evaporated and deposited on the PC lens. Thereafter, the air pressure in the evaporation unit was returned to normal pressure, and then irradiated with ultraviolet rays of about 1000 mJ/cm² using a highpressure mercury lamp in an air atmosphere, so as to form a hard coat layer.

### [Film Formation Evaluation]

With respect to the resin body on which the hard coat film was formed (the PC lens in Experimental Example 1), whether the hard coat film was formed on each of five positions including a center of the resin body and four corners of the resin body (a region at an upper left corner from the center of the resin, a region at an upper right corner from the center of the resin, a region at a lower left corner from the center of the resin, and a region at an lower right corner from the center of the resin) was confirmed by measuring a film thickness with a spectrophotometer USPM-RU (produced by Olympus Corporation). A position where the film thickness could be measured was assumed that a film was formed.
The film thickness could be measured at the five measurement positions of the resin body (film was formed): Good
A position where the film thickness could not be measured was present among the five measurement positions of the resin body: Poor

### [Film thickness evaluation]

With respect to the resin body on which the hard coat film was formed, the film thickness of the hard coat film on each of the five positions including the center of the resin body and the four corners of the resin body (the region at the upper left corner from the center of the resin, the region at the upper right corner from the center of the resin, the region at the lower left corner from the center of the resin, and the region at the lower right corner from the center of the resin) was measured with the spectrophotometer USPM-RU. A difference between a maximum value and a minimum value (film thickness difference) was calculated for the film thickness measured at each of the five positions.
The difference (film thickness difference) is 1 µm or less: Good
The difference (film thickness difference) is greater than 1 µm: Poor

### [Infectiveness Evaluation]

With respect to the resin body on which the hard coat film was formed, it was visually confirmed whether the resin body was infected.
No infection to the resin body could not be confirmed: Good
Infection to the resin body could be confirmed: Poor

### <Experimental Example 2>

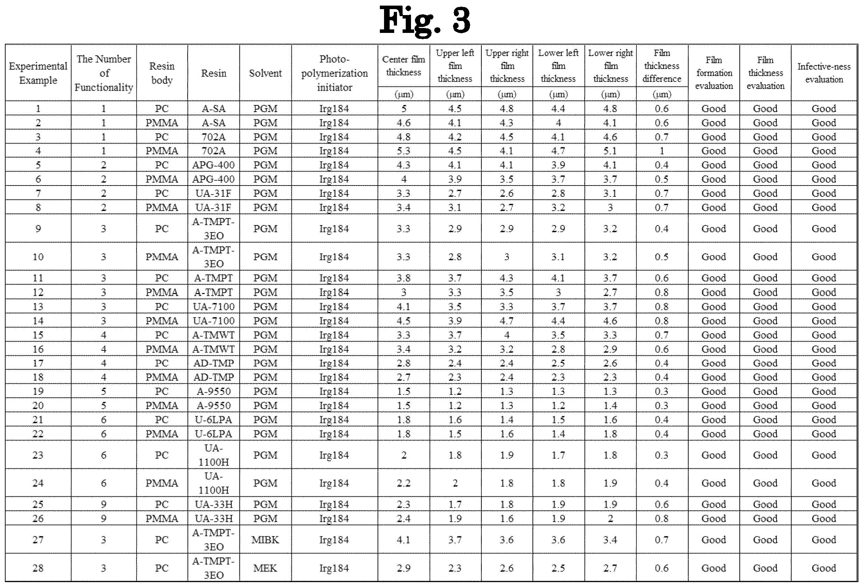

A hard coat film was formed and evaluated in the same manner as in Experimental Example 1, except that a PMMA (acrylic resin) base body (flat plate) was used instead of the PC lens. The results are shown in Fig. 3.

### <Experimental Example 3>

A hard coat film was formed and evaluated in the same manner as in Experimental Example 1, except that 702A (2-hydroxy-3-phenoxypropyl acrylate) (produced by Shin-Nakamura Chemical Co., Ltd.) was used as the resin of the hard coating agent. The results are shown in Fig. 3.

### <Experimental Example 4>

A hard coat film was formed and evaluated in the same manner as in Experimental Example 3, except that a PMMA (acrylic resin) base body (flat plate) was used instead of the PC lens. The results are shown in Fig. 3.

### <Experimental Example 5>

A hard coat film was formed and evaluated in the same manner as in Experimental Example 1, except that APG-400 (polypropylene glycol #400 diacrylate) (produced by Shin-Nakamura Chemical Co., Ltd.) was used as the resin of the hard coating agent. The results are shown in Fig. 3.

### <Experimental Example 6>

A hard coat film was formed and evaluated in the same manner as in Experimental Example 5, except that a PMMA (acrylic resin) base body (flat plate) was used instead of the PC lens. The results are shown in Fig. 3.

### <Experimental Example 7>

A hard coat film was formed and evaluated in the same manner as in Experimental Example 1, except that UA-31F (produced by Shin-Nakamura Chemical Co., Ltd.) was used instead of A-SA as the resin of the hard coating agent. The results are shown in Fig. 3.

### <Experimental Example 8>

A hard coat film was formed and evaluated in the same manner as in Experimental Example 7, except that a PMMA (acrylic resin) base body (flat plate) was used instead of the PC lens. The results are shown in Fig. 3.

### <Experimental Example 9>

A hard coat film was formed and evaluated in the same manner as in Experimental Example 1, except that A-TMPT-3EO (ethoxylated trimethylol propane triacrylate) (produced by Shin-Nakamura Chemical Co., Ltd.) was used instead of A-SA as the resin of the hard coating agent. The results are shown in Fig. 3.

### <Experimental Example 10>

A hard coat film was formed and evaluated in the same manner as in Experimental Example 9, except that a PMMA (acrylic resin) base body (flat plate) was used instead of the PC lens. The results are shown in Fig. 3.

### <Experimental Example 11>

A hard coat film was formed and evaluated in the same manner as in Experimental Example 1, except that A-TMPT (trimethylol propane triacrylate) (produced by Shin-Nakamura Chemical Co., Ltd.) was used instead of A-SA as the resin of the hard coating agent. The results are shown in Fig. 3.

### <Experimental Example 12>

A hard coat film was formed and evaluated in the same manner as in Experimental Example 11, except that a PMMA (acrylic resin) base body (flat plate) was used instead of the PC lens. The results are shown in Fig. 3.

### <Experimental Example 13>

A hard coat film was formed and evaluated in the same manner as in Experimental Example 1, except that UA-7100 (produced by Shin-Nakamura Chemical Co., Ltd.) was used instead of A-SA as the resin of the hard coating agent. The results are shown in Fig. 3.

### <Experimental Example 14>

A hard coat film was formed and evaluated in the same manner as in Experimental Example 13, except that a PMMA (acrylic resin) base body (flat plate) was used instead of the PC lens. The results are shown in Fig. 3.

### <Experimental Example 15>

A hard coat film was formed and evaluated in the same manner as in Experimental Example 1, except that A-TMMT (pentaerythritol tetraacrylate) (produced by Shin-Nakamura Chemical Co., Ltd.) was used instead of A-SA as the resin of the hard coating agent. The results are shown in Fig. 3.

### <Experimental Example 16>

A hard coat film was formed and evaluated in the same manner as in Experimental Example 15, except that a PMMA (acrylic resin) base body (flat plate) was used instead of the PC lens. The results are shown in Fig. 3.

### <Experimental Example 17>

A hard coat film was formed and evaluated in the same manner as in Experimental Example 1, except that AD-TMP (ditrimethylolpropane tetraacrylate) (produced by Shin-Nakamura Chemical Co., Ltd.) was used instead of A-SA as the resin of the hard coating agent. The results are shown in Fig. 3.

### <Experimental Example 18>

A hard coat film was formed and evaluated in the same manner as in Experimental Example 17, except that a PMMA (acrylic resin) base body (flat plate) was used instead of the PC lens. The results are shown in Fig. 3.

### <Experimental Example 19>

A hard coat film was formed and evaluated in the same manner as in Experimental Example 1, except that A-9550 (dipentaerythritol polyacrylate) (produced by Shin-Nakamura Chemical Co., Ltd.) was used instead of A-SA as the resin of the hard coating agent. The results are shown in Fig. 3.

### <Experimental Example 20>

A hard coat film was formed and evaluated in the same manner as in Experimental Example 19, except that a PMMA (acrylic resin) base body (flat plate) was used instead of the PC lens. The results are shown in Fig. 3.

### <Experimental Example 21>

A hard coat film was formed and evaluated in the same manner as in Experimental Example 1, except that U-6LPA (produced by Shin-Nakamura Chemical Co., Ltd.) was used instead of A-SA as the resin of the hard coating agent. The results are shown in Fig. 3.

### <Experimental Example 22>

A hard coat film was formed and evaluated in the same manner as in Experimental Example 21, except that a PMMA (acrylic resin) base body (flat plate) was used instead of the PC lens. The results are shown in Fig. 3.

### <Experimental Example 23>

A hard coat film was formed and evaluated in the same manner as in Experimental Example 1, except that UA-1100H (produced by Shin-Nakamura Chemical Co., Ltd.) was used instead of A-SA as the resin of the hard coating agent. The results are shown in Fig. 3.

### <Experimental Example 24>

A hard coat film was formed and evaluated in the same manner as in Experimental Example 23, except that a PMMA (acrylic resin) base body (flat plate) was used instead of the PC lens. The results are shown in Fig. 3.

### <Experimental Example 25>

A hard coat film was formed and evaluated in the same manner as in Experimental Example 1, except that UA-33H (produced by Shin-Nakamura Chemical Co., Ltd.) was used instead of A-SA as the resin of the hard coating agent. The results are shown in Fig. 3.

### <Experimental Example 26>

A hard coat film was formed and evaluated in the same manner as in Experimental Example 25, except that a PMMA (acrylic resin) base body (flat plate) was used instead of the PC lens. The results are shown in Fig. 3.

### <Experimental Example 27>

A hard coat film was formed and evaluated in the same manner as in Experimental Example 9, except that MIBK (methyl isobutyl ketone) (produced by Kishida Chemical Co., Ltd.), which is a solvent highly infective to the lens, was used as the solvent instead of PGM.

### <Experimental Example 28>

A hard coat film was formed and evaluated in the same manner as in Experimental Example 9, except that methyl ethyl ketone (MEK) (produced by Kishida Chemical Co., Ltd.), which is a solvent highly infective to the lens, was used as the solvent instead of PGM.

### <Comparative Example 1>

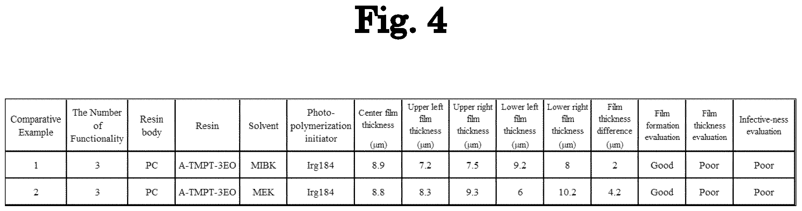

A hard coat film was formed and evaluated in the same manner as in Experimental Example 9, except that MIBK, which is a solvent highly infective to the lens, was used as the solvent instead of PGM, and a hard coat film was formed with the spin coating method of the related art as a method of producing a hard-coated resin body.. In the spin coating method, the hard coating agent was applied to the lens using a spin coater, and was irradiated with the ultraviolet rays of about 1000 mJ/cm² using a highpressure mercury lamp in an air atmosphere, so as to form the hard coat layer. The results are shown in Fig. 4. In the comparative example as well, the evaluation was performed according to the same evaluation criteria as in Experimental Example 1.

### <Comparative Example 2>

A hard coat film was formed with the spin coating method and evaluated in the same manner as in Comparative Example 1, except that MEK, which is a solvent highly infective to the lens, was used as the solvent instead of MIBK. The results are shown in Fig. 4.

As shown in Fig. 3, it was confirmed that a hard coat layer can be easily formed on a resin body (lens in the experimental examples) by the method of producing the hard-coated resin body according to the disclosure (vapor phase transfer method). In addition, it was confirmed that even when a hard coat film is formed using a resin body of a material that is easily infected and a solvent that easily infects the resin body, it is possible to prevent the solvent from infecting the resin body.

As shown in Fig. 4, it was confirmed that when a hard coat film is formed using a resin body of a material that is easily infected and a solvent that easily infects the resin body with the spin coating method according to the related art, the resin body is infected. It was also confirmed that unevenness was observed in the film thickness.

- 1: Function-adding base body
- 2: Base body
- 8: Lens
- 10: Hard coating agent deposition unit
- 11: Inkjet printer
- 12: Personal computer
- 13: Cartridge
- 14: Mounted unit
- 15: Inkjet head
- 16: Control unit
- 30: Evaporation unit
- 50: Hard coating agent curing unit
- 60: Volatilization unit
- 100: Production system for hard-coated resin body

## Claims

1. A method of producing a hard-coated resin body, comprising:
a first step of applying a hard coating agent to a base body to obtain a function-adding base body;
a second step of setting the function-adding base body obtained in the first step to face a resin body, of heating the function-adding base body to evaporate the hard coating agent applied to the function-adding base body, and of depositing the hard coating agent on the resin body, wherein the second step is carried out in an evaporation unit; and
a third step of curing the hard coating agent on the resin body on which the hard coating agent is deposited in the second step.

2. The method of producing the hard-coated resin body according to claim 1,
wherein in the third step, the hard coating agent on the resin body on which the hard coating agent is deposited in the second step is cured by at least performing irradiation of ultraviolet rays to the resin body on which the hard coating agent is deposited.

3. The method of producing the hard-coated resin body according to claim 1 or 2,
wherein in the first step, the hard coating agent is applied to a metal base body as the base body.

4. The method of producing the hard-coated resin body according to any one of claims 1 to 3,
wherein in the first step, the function-adding base body is obtained by printing the hard coating agent onto the base body with using a printing apparatus.

5. The method of producing the hard-coated resin body according to any one of claims 1 to 4,
wherein in the second step, the function-adding base body obtained in the first step is set to face the resin body in a non-contact manner, the function-adding base body is heated to evaporate the hard coating agent applied to the function-adding base body, and the hard coating agent is deposited on the resin body.

6. The method of producing the hard-coated resin body according to any one of claims 1 to 5,
wherein in the third step, the hard coating agent is cured by at least heating the resin body on which the hard coating agent is deposited.

7. The method of producing the hard-coated resin body according to any one of claims 1 to 6,
wherein the resin body is a lens.

## Patentansprüche

1. Verfahren zum Herstellen eines hartbeschichteten Harzkörpers, umfassend:
einen ersten Schritt des Aufbringens eines Hartbeschichtungsmittels auf einen Grundkörper, um einen funktionserweiternden Grundkörper zu erhalten;
einen zweiten Schritt des Setzens des im ersten Schritt erhaltenen funktionserweiternden Grundkörpers, so dass er einem Harzkörper zugewandt ist, des Erhitzens des funktionserweiternden Grundkörpers, um das auf den funktionserweiternden Grundkörper aufgebrachte Hartbeschichtungsmittels zu verdampfen, und des Abscheidens des Hartbeschichtungsmittels auf dem Harzkörper, wobei der zweite Schritt in einer Verdampfungseinheit durchgeführt wird; und
einen dritten Schritt des Härtens des Hartbeschichtungsmittels auf dem Harzkörper, auf dem das Hartbeschichtungsmittel im zweiten Schritt abgeschieden wird.

2. Verfahren zur Herstellung des hartbeschichteten Harzkörpers nach Anspruch 1,
wobei im dritten Schritt das Hartbeschichtungsmittel auf dem Harzkörper, auf dem das Hartbeschichtungsmittel im zweiten Schritt abgeschieden wird, gehärtet wird, indem mindestens eine Bestrahlung mit ultravioletten Strahlen auf den Harzkörper durchgeführt wird, auf dem das Hartbeschichtungsmittel wird.

3. Verfahren zur Herstellung des hartbeschichteten Harzkörpers nach Anspruch 1 oder 2,
wobei im ersten Schritt das Hartbeschichtungsmittel auf einen metallischen Grundkörper als Grundkörper aufgebracht wird.

4. Verfahren zur Herstellung des hartbeschichteten Harzkörpers nach einem der Ansprüche 1 bis 3,
wobei im ersten Schritt der funktionserweiternde Grundkörper durch Aufdrucken des Hartbeschichtungsmittels auf den Grundkörper unter Verwendung einer Druckvorrichtung erhalten wird.

5. Verfahren zur Herstellung des hartbeschichteten Harzkörpers nach einem der Ansprüche 1 bis 4,
wobei im zweiten Schritt der im ersten Schritt erhaltene funktionserweiternde Grundkörper so gesetzt wird, dass er dem Harzkörper berührungslos gegenüberliegt, der funktionserweiternde Grundkörper erhitzt wird, um das auf den funktionserweiternden Grundkörper aufgebrachte Hartbeschichtungsmittels zu verdampfen, und das Hartbeschichtungsmittel auf dem Harzkörper abgeschieden wird.

6. Verfahren zur Herstellung des hartbeschichteten Harzkörpers nach einem der Ansprüche 1 bis 5,
wobei im dritten Schritt das Hartbeschichtungsmittel durch mindestens Erhitzen des Harzkörpers, auf dem das Hartbeschichtungsmittel abgeschieden wird, gehärtet wird.

7. Verfahren zur Herstellung des hartbeschichteten Harzkörpers nach einem der Ansprüche 1 bis 6,
wobei der Harzkörper eine Linse ist.

## Revendications

1. Procédé de production d'un corps en résine à revêtement dur, comprenant :
une première étape d'application d'un agent de revêtement dur sur un corps de base pour obtenir un corps de base à addition de fonction ;
une deuxième étape de mise du corps de base à addition de fonction obtenu à la première étape en face d'un corps en résine, de chauffage du corps de base à addition de fonction pour évaporer l'agent de revêtement dur appliqué sur le corps de base à addition de fonction, et de dépôt de l'agent de revêtement dur sur le corps en résine, où la deuxième étape est réalisée dans une unité d'évaporation, et
une troisième étape de durcissement de l'agent de revêtement dur sur le corps en résine sur lequel l'agent de revêtement dur est déposé dans la deuxième étape.

2. Procédé de production du corps en résine à revêtement dur selon la revendication 1,
dans lequel dans la troisième étape, l'agent de revêtement dur sur le corps en résine sur lequel l'agent de revêtement dur est déposé dans la deuxième étape est durci au moins en effectuant une irradiation par rayons ultraviolets du corps en résine sur lequel l'agent de revêtement dur est déposé.

3. Procédé de production du corps en résine à revêtement dur selon la revendication 1 ou 2,
dans lequel dans la première étape, l'agent de revêtement dur est appliqué sur un corps de base métallique comme étant le corps de base.

4. Procédé de production du corps en résine à revêtement dur selon l'une quelconque des revendications 1 à 3,
dans lequel dans la première étape, le corps de base à addition de fonction est obtenu en imprimant l'agent de revêtement dur sur le corps de base en utilisant un appareil d'impression.

5. Procédé de production du corps en résine à revêtement dur selon l'une quelconque des revendications 1 à 4,
dans lequel dans la deuxième étape, le corps de base à addition de fonction obtenu dans la première étape est mis en face du corps en résine sans contact, le corps de base à addition de fonction est chauffé pour évaporer l'agent de revêtement dur appliqué sur le corps de base à addition de fonction, et l'agent de revêtement dur est déposé sur le corps en résine.

6. Procédé de production du corps en résine à revêtement dur selon l'une quelconque des revendications 1 à 5,
dans lequel dans la troisième étape, l'agent de revêtement dur est durci au moins en chauffant le corps en résine sur lequel l'agent de revêtement dur est déposé.

7. Procédé de production du corps en résine à revêtement dur selon l'une quelconque des revendications 1 à 6,
dans lequel le corps en résine est une lentille.
